# EUROPÄISCHE PATENTSCHRIFT

(11) **EP 3 375 259 B1**
(45) Veröffentlichungstag und Bekanntmachung des Hinweises auf die Patenterteilung: **11.09.2019**
(21) Anmeldenummer: 16790904.3
(22) Anmeldetag: 19.10.2016
(51) Int. Cl.: H05B 37/02, H04W 64/00

(54) **SYSTEM UND VERFAHREN ZUR POSITIONSERMITTLUNG EINER MOBILEN BAKE**
SYSTEM AND METHOD FOR DETERMINING THE POSITION OF A MOBILE WARNING POST
SYSTÈME ET PROCÉDÉ DE DÉTERMINATION DE POSITION D'UNE BALISE MOBILE

(30) Priorität: 13.11.2015 DE 102015222471
(43) Veröffentlichungstag der Anmeldung: 19.09.2018
(73) Patentinhaber: OSRAM GmbH, 80807 München (DE)
(72) Erfinder: FEIL, Henry, 82008 Unterhaching (DE)
(86) Internationale Anmeldenummer: PCT/EP2016/075052
(87) Internationale Veröffentlichungsnummer: WO 2017/080765

(56) Entgegenhaltungen:
- WO-A1-2015/025235
- WO-A1-2015/162295
- US-A1- 2011 140 864

## Beschreibung

Die Erfindung betrifft ein System zur Positionsermittlung einer mobilen Bake. Weiterhin betrifft die Erfindung ein Verfahrung zur Positionsermittlung einer mobilen Bake.

Aus der WO 2015/162295 ist ein System zur Positionsermittlung einer mobilen Bake bekannt, das über die Messung der Feldstärke und der Signallaufzeit eines von der mobilen Bake ausgesendeten Signals zu mehreren Beleuchtungseinrichtungen die Position der mobilen Bake ermitteln kann.

Beleuchtungskomponenten wie Leuchten sind innerhalb von Gebäuden von Haus aus sehr homogen in einem so genannten Leuchtenraster verteilt, haben einen permanenten Zugang zur Energieversorgung und weisen ein Gehäuse auf, welches prädestiniert dafür ist, zusätzliche Module und Funktionalitäten aufzunehmen.

Moderne Leuchten nutzen LED-basierte Leuchtmittel, welche von einem elektronischen Betriebsgerät (Treiber) betrieben werden. Der Treiber wird gewöhnlich benutzt, um ein LED-Modul innerhalb der Leuchte anzusteuern. Andererseits wird der Treiber angeschlossen an ein übergreifendes Lichtmanagementsystem. Der Treiber kann weiterhin einen zusätzlichen Energieversorgungsanschluss für zusätzliche Kommunikationsmodule und eine Kommunikationsschnittstelle zur Kommunikation mit diesem aufweisen.

Bei einem solchen Kommunikationsmodul kann es sich um einen ortsfeste Sender (Bake, engl.: Beacon) handeln, welcher von einem mobilen Endgerät empfangen wird und ortsgebundene Dienste anbietet wie beispielsweise eine Selbstortung. Daneben können auch mobile Baken (Beacons) verwendet werden, um diese über die Kommunikationsmodule zu orten. Damit kann beispielsweise der Standort von Gegenständen innerhalb eines Gebäudes ermittelt werden. In diesem Zusammenhang offenbart die DE 20 2009 005 690 U1 ein Ortungssystem für Einrichtungsgegenstände eines Gebäudes, wobei dieser Einrichtungsgegenstand mindestens einen Ortungssignalgeber umfasst, wobei der Ortungssignalgeber in der Lage ist, mindestens ein Ortungssignal abzugeben und/oder mindestens einen Ortungssignalempfänger umfasst, wobei der Ortungssignalempfänger in der Lage ist, mindestens eines dieser Ortungssignale entgegen zu nehmen, wobei Ortungssignalgeber und Ortungssignalempfänger derart zusammenwirken, dass durch dieses Zusammenwirken die räumliche Position des Einrichtungsgegenstandes im Gebäude identifizierbar ist.

Über dies können die Kommunikationsmodule den Aufbau eines Netzwerkes mittels wechselseitiger Kommunikation zu den jeweiligen benachbarten Kommunikationsmodulen ermöglichen, um Daten zu empfangen und an ein Gateway weiterzuleiten. Ein solches Gateway kann beispielsweise an einen Server angeschlossen sein, welcher die Daten sammelt. Ein von einer mobilen Bake ausgesendetes Identifikationssignal kann von mehreren Kommunikationsmodulen empfangen werden. Dadurch kann eine höhere Sicherheit der mobilen Bake selbst und somit auch des Gegenstandes erzielt werden, welcher mit der mobilen Bake ausgerüstet ist.

Jede Bake wird mit einer zugehörigen Signalstärke empfangen. Diese Information hilft die Genauigkeit der Lokalisierung zu erhöhen, entweder durch Trilateration (Pegelmessung, keine Laufzeitmessung) oder bei der Verwendung einer so genannten Fingerabdruckkarte welche eine Karte repräsentiert, in der vorab gemessene Signalstärken eingetragen sind, welche dem zugehörigen Ort zugewiesen sind. Die Kommunikationsmodule empfangen die Identifikationssignale welche eine eindeutige Identifikationsnummer beinhalten, die so genannte UUID (universally unique identifier) und leiten diese zusammen mit der individuell empfangenen Signalstärke, welche als Lokalisierungsinformation dient, über ein Maschennetzwerk an einen Server weiter. Der Server kann hieraus den Verlauf des Aufenthaltsortes der in dem System eingebundenen mobilen Baken ermitteln.

Für diese Anwendung wirkt störend, dass ein Maschennetzwerk die Eigenschaft hat, unterschiedliche Wege zu verwenden, um die Information an den Server zu senden. Dies bedeutet, dass die empfangene Lokalisierungsinformation in einer Reihenfolge empfangen werden kann, welche nicht zwingend der Reihenfolge der Erfassung der Lokalisierungsinformation entspricht. Dadurch werden Ungenauigkeiten in den Auswerteberechnungen verursacht.

Es ist daher Aufgabe der vorliegenden Erfindung, ein System und ein Verfahren bereitzustellen, welches die Ortungsgenauigkeit bei über ein Maschennetz transportierten Identifikationssignalen zur Ortsbestimmung verbessert.

Diese Aufgabe wird gelöst durch ein System mit den Merkmalen des Patentanspruches 1 sowie durch ein Verfahren mit den Merkmalen des Patentanspruches 10. Vorteilhafte Weiterbildungen der vorliegenden Erfindung sind Gegenstand der abhängigen Ansprüche.

Die Erfindung geht aus von einem System zur Positionsermittlung einer mobilen Bake, welches weitergebildet wird durch mindestens eine erste und mindestens eine zweite Beleuchtungseinrichtung, umfassend jeweils ein Kommunikationsmodul zum Aufbau eines Datennetzwerks zwischen der mindestens einen ersten und mindestens einen zweiten Beleuchtungseinrichtung mittels einer drahtlosen Kommunikationsverbindung, sowie die mobile Bake, welche dazu ausgelegt ist, ein Identifikationssignal mit einer innerhalb des Systems einmaligen Baken-Identifikationsnummer auszusenden. Dabei sind die jeweiligen Kommunikationsmodule der mindestens einen ersten und mindestens einen zweiten Beleuchtungseinrichtung dazu ausgelegt, eine jeweilige Signalstärke, mit der das Identifikationssignal von dem jeweiligen Kommunikationsmodul empfangbar ist, zu ermitteln, wobei die mobile Bake einen Zeitgeber aufweist und dazu ausgelegt ist, zusätzlich zu der Baken-Identifikationsnummer einen Zählerstand des Zeitgebers korrespondierend mit einem Zeitpunkt des Aussendens des ersten Identifikationssignals zu übertragen.

Der Erfindung liegt die Erkenntnis zu Grunde, dass der störende Einfluss von Verzögerungen, welche aufgrund unterschiedlicher Routing-Wege der übermittelten Lokalisierungsinformationen innerhalb des Datennetzwerks auftreten können, dadurch vermieden werden kann, indem ein Zeitstempel verwendet wird zur Dokumentation, welche Baken-Lokalisierungsinformation wann erfasst wurde.

Demzufolge kann für jedes Kommunikationsmodul ein eigener Zeitgeber vorgesehen sein, wobei alle Zeitgeber zu synchronisieren sind. Die Synchronisation der Kommunikationsmodule ist hierbei aufwendig, weil interne Zeitgeber üblicherweise über die Zeit eine Drift aufweisen und demzufolge ein Triggersignal wenigstens für den Start der internen Zeitgeber erforderlich ist und um diese von Zeit zu Zeit zu resynchronisieren.

Der Erfindung liegt die weitere Erkenntnis zugrunde, dass sich eine technisch einfachere Lösung ergibt, wenn stattdessen ein Zeitgeber in der mobilen Bake selbst benutzt wird, welcher einen Zeitstempel generiert, wobei dieser Zeitstempel der Lokalisierungsinformation hinzugefügt wird. Auf der Serverseite können alle Lokalisierungsinformationen für jede mobile Bake nach der Zeit sortiert werden, wodurch eine zuverlässigere Objektverfolgung realisierbar wird. Insbesondere ergibt sich hierdurch der Vorteil, dass der Zeitgeber der mobilen Bake keinerlei Synchronisierung bedarf, sodass ein lokaler Zeitgeber ausreichend ist.

Gemäß einer vorteilhaften Weiterbildung weist das jeweilige Kommunikationsmodul eine innerhalb des Systems einmalige Modul-Identifikationsnummer auf, wobei das jeweilige Kommunikationsmodul dazu ausgelegt ist, beim Empfang des Identifikationssignals über das Datennetzwerk einen Datensatz umfassend seine eigene Modul-Identifikationsnummer, die mit dem ersten Identifikationssignal übertragene Baken-Identifikationsnummer, die jeweils ermittelte Signalstärke sowie den mit dem Identifikationssignal übertragenen Zählerstand zu versenden. Durch die Zusammenstellung eines derartigen Datensatzes ist somit die Ermittlung des zeitlichen Zusammenhangs zwischen allen in dem Datennetzwerk übertragenen Datensätzen möglich, die der mobilen Bake zugeordneten sind, wobei sowohl der jeweilige Empfangsort in Form der jeweiligen Modul-Identifikationsnummer sowie die dazugehöre Signalstärke, mit der das Identifikationssignal an dieser Stelle empfangen wurde, mit übertragen werden. Basierend auf diesen Daten kann somit der Weg der mobilen Bake genauer nachverfolgt werden.

Bevorzugt kann für den Zeigeber eine Zeitbasis von 100 Millisekunden vorgesehen sein. Wenn die Zeitbasis kurz genug ist, können somit bewegliche Objekte, die mit der mobilen Bake ausgestattet sind, verfolgt werden. Der Zeitgeber sollte einen Zählerbereich aufweisen, der größer als die maximale Routing-Zeit in dem Datennetzwerk, insbesondere einem Maschennetzwerk, ist, um die Lokalisierungsinformation nicht zweimal mit demselben Zeitstempel zu empfangen. Wenn daher die maximale Routing-Zeit in dem Maschennetzwerk fünf Sekunden benötigt, wird vorgeschlagen, dass der maximal Zählerwert mindestens 128 (7 Bit) beträgt, was ausreichend ist für 12,8 Sekunden bei einer gewählten Zeitbasis von 100 Millisekunden.

Gemäß einer vorteilhaften Weiterbildung weist das System eine Servereinheit auf, in welcher die Einbaupositionen der mindestens einen ersten und mindestens einen zweiten Beleuchtungseinrichtung als Funktion der jeweiligen Modul-Identifikationsnummer gespeichert ist und welche dazu ausgelegt ist, in Abhängigkeit von den jeweils aus dem Datennetzwerk an die Servereinheit übertragbaren Datensätzen, welche die Baken-Identifikationsnummer der mobilen Bake enthalten, die Position der mobilen Bake zu ermitteln. Hierdurch können zentral die Aufenthaltsorte der jeweiligen mit einer mobilen Bake ausgestatteten Gegenstände erfasst und überwacht werden.

Gemäß einer vorteilhaften Weiterbildung ist die Servereinheit dazu ausgelegt, für die Ermittlung der Position der mobilen Bake nur Datensätze zu berücksichtigen, deren übertragener Zählerstand innerhalb eines jeweils vorgebbaren Wertebereichs liegt. Somit können zur Ermittlung der jeweiligen aktuellen Position die Datensätze herangezogen werden, welche innerhalb eines Zeitintervalls liegen, welches in Vielfachen der verwendeten Zeitbasis des Zeitgebers beliebig vorgegeben werden kann, beispielsweise 100 Millisekunden, 200 Millisekunden oder 500 Millisekunden. Dadurch ist sichergestellt, dass alle diese Datensätze innerhalb desselben Zeitintervalls von den jeweiligen Kommunikationsmodulen empfangen wurden. Dieser feste zeitliche Bezug gilt insbesondere für ein von einer Bake üblicherweise ausgesendetes Funksignal, was insbesondere im Hinblick auf den Anwendungsbereich innerhalb von Gebäuden mit vergleichsweise geringen Entfernungen praktisch keinen Laufzeitunterschied zeigt.

Weiterhin kann vorgesehen sein, dass nachdem die Lokalisierungsinformationen einschließlich des Zählerstandes (Zeitstempel) nach der Baken-Identifikationsnummer sortiert wurden, eine weiterer Zeitstempel, welcher von dem Server erzeugt wird, hinzugefügt wird, um von einer relativen zu einer absoluten Zeitskala zu wechseln, welche notwendig für die weiteren Analysen ist. Dies gilt insbesondere dann, wenn der Weg eines zu verfolgenden Objektes über einen längeren Zeitraum aufgezeichnet werden soll, da der von der mobilen Bake bereitgestellte Zählerstand aufgrund seiner Auslegung als Kurzzeit-Zeitgeber hier bereits übergelaufen sein kann, wodurch sich Mehrdeutigkeiten ergeben können.

Alternativ kann eine clientseitige Positionsermittlung durch ein mobiles Endgerät durchgeführt werden, beispielsweise mit Hilfe eines Smartphones. Das mobile Endgerät kann dafür ausgelegt sein, den Zugang zu dem Datennetzwerk zu ermöglichen und die für die Positionsermittlung der mobilen Bake relevanten Datensätze aus dem Datennetzwerk abzurufen.

Vorteilhafterweise sind die Einbaupositionen der mindestens einen ersten oder der mindestens einen zweiten Beleuchtungseinrichtung bereits auf dem mobilen Endgerät gespeichert, sodass die Lokalisierung der mobilen Bake auch ohne eine Online-Verbindung ermöglicht wird. Selbstverständlich kann auf diese Weise auch eine Selbstortung des mobilen Endgerätes erfolgen, indem das mobile Endgerät eine mobile Bake imitiert.

Gemäß einer weiteren bevorzugten Ausführungsform ist das Datennetzwerk als Bluetooth-Maschennetzwerk ausgebildet. Hierdurch kann die Sendeleistung niedrig gehalten werden, da die Datenübertragung zwischen benachbarten Beleuchtungseinrichtungen erfolgen kann. Auf diese Weise müssen keine großen Distanzen wie bei der Verwendung eines zentralen Netzwerkknotens überbrückt werden. Bluetooth eignet sich besonders für derartige Funknetze in einem Umgebungsbereich von ca. 10 Metern, insbesondere die Bluetooth-Variante "Bluetooth Low Energy" (BLE), auch Bluetooth Smart genannt.

Gemäß einer weiteren vorteilhaften Ausführungsform umfasst das System ein Gateway, welches dazu ausgelegt ist, eine Datenverbindung zu dem Datennetzwerk herzustellen. Insbesondere ermöglicht das Gateway die Verbindung zu der Servereinheit. Damit kann das Datennetzwerk, in ein übergeordnetes Netzwerk eingebunden werden, beispielsweise in ein LAN-Netz oder in ein WLAN-Netz. Das Gateway kann außerdem dazu ausgelegt sein, die Verbindung zu einem mobilen Endgerät bereitzustellen.

Gemäß einer weiteren vorteilhaften Ausführungsform umfasst zumindest die erste Beleuchtungseinrichtung ein Leuchtmittel sowie ein elektronisches Betriebsgerät zum Betreiben des Leuchtmittels, wobei das Kommunikationsmodul der ersten Beleuchtungseinrichtung über eine Datenschnittstelle mit dem elektronisches Betriebsgerät verbunden ist, wobei das Kommunikationsmodul dazu ausgelegt ist, Betriebswerte aus dem elektronischen Betriebsgerät auszulesen und/oder in das elektronische Betriebsgerät einzuschreiben.

Dadurch kann in vorteilhafter Weise das Datennetzwerk benutzt werden, um die erste Beleuchtungseinrichtung zu konfigurieren, also bestimmte vorgegebene Parameter, welche von einem Hersteller der Beleuchtungseinrichtung beziehungsweise des elektronischen Betriebsgerätes zu einer Änderung durch den Kunden freigegeben sind, im Rahmen der vorgegebenen Grenzen für den jeweiligen Parameter anzupassen. Ebenso kann vorgesehen sein, Betriebswerte aus dem elektronischen Betriebsgerät auszulesen, beispielsweise eine aktuell eingestellte Leistung oder den Wert eines Betriebsstundenzählers.

Alternativ oder zusätzlich kann vorgesehen sein, eine Betriebs-Software des elektronischen Betriebsgerätes, die sogenannte Firmware, zu aktualisieren (updaten), insbesondere ein vollständiges Software-Update zu installieren, durch das sich die Möglichkeit eines sogenannten Firmware-Over-the-Air (FOTA) ergibt.

Gemäß einer vorteilhaften Weiterbildung ist das elektronische Betriebsgerät dazu ausgelegt, eine Energieversorgung für das Kommunikationsmodul der ersten Beleuchtungseinrichtung bereitzustellen. Dadurch kann beispielsweise ein eigenes Schaltnetzteil zur Versorgung des Kommunikationsmoduls eingespart werden.

Gemäß einer vorteilhaften Ausführungsform ist die mobile Bake dazu ausgelegt, eine Eigenbewegung zu detektieren und in Abhängigkeit von einer detektierten Eigenbewegung das Identifikationssignal auszusenden. Insbesondere kann vorgesehen sein, dass ausschließlich dann ein Identifikationssignal gesendet wird, wenn eine Eigenbewegung der mobilen Bake detektiert wurde. Hierfür können beispielsweise ein Beschleunigungssensor, ein Gyrosensor, ein Magnetfeldsensor oder ein Lichtsensor mit einer Schwellwertauslösung eingesetzt werden.

Ebenso kann vorgesehen sein, dass innerhalb einer vorgebbaren Zeitdauer auch ohne detektierte Eigenbewegung jedenfalls ein Identifikationssignal ausgesendet wird. Dies kann beispielsweise einmal pro Tag erfolgen. Auf diese Weise ist sichergestellt, dass eine mobile Bake zumindest tagesaktuell auf dem neuen Stand erfasst wird und ausbleibende Messwerte nicht als fehlende Standortveränderung interpretiert werden, wenn beispielsweise die mobile Bake ausgefallen ist, beispielsweise in Folge einer leeren Batterie der mobilen Bake.

Durch das Aussenden des Signals in lediglich den Fällen, in denen die mobile Bake bewegt wird, kann der Stromverbrauch minimiert werden. Auf diese Weise lassen sich besonders lange Batterielaufzeiten realisieren. Des Weiteren ermöglicht die Bluetooth-Low-Energy-Technologie bereits einen geringen Stromverbrauch, da die Geräte in ihrem Betrieb bereits auf niedrigen Stromverbrauch optimiert sind.

Optional kann vorgesehen sein, dass die mobile Bake ein Signal aussendet, wenn der Batterieladezustand niedrig ist. Ein solches Signal kann beispielsweise über das Datennetzwerk gesendet werden. Alternativ oder zusätzlich ist eine optische und/oder akustische Signalisierung möglich.

Die Erfindung geht des weiteren aus von einem Verfahren zur Positionsermittlung einer mobilen Bake, welches erfindungsgemäß weitergebildet wird durch Aufbauen eines Datennetzwerkes zwischen mindestens einer ersten und mindestens einer zweiten Beleuchtungseinrichtung mittels einer drahtlosen Kommunikationsverbindung, Aussenden eines Identifikationssignals mit einer innerhalb eines Systems einmaligen Baken-Identifikationsnummer durch die mobile Bake, Ermitteln einer jeweiligen Signalstärke, mit der das erste Identifikationssignal von einem jeweiligen Kommunikationsmodul der mindestens einen ersten und mindestens einen zweiten Beleuchtungseinrichtung empfangen wird, und zusätzlich zu der Baken-Identifikationsnummer Übertragen eines Zählerstandes eines Zeitgebers der mobilen Bake mit dem ersten Identifikationssignal korrespondierend mit einem Zeitpunkt des Aussendens des ersten Identifikationssignals zur Übertragung.

Durch das Hinzufügen des Zählerstandes zu der Baken-Identifikationsnummer bei der Aussendung des Identifikationssignals an die mindestens eine erste und mindestens eine zweite Beleuchtungseinrichtung kann somit unabhängig von dem jeweiligen Empfangsort eine Zusammenführung der jeweiligen zur Positionsermittlung benötigten Daten erfolgen, ohne dass eine Synchronisation der Empfangsgeräte, also der Kommunikationsmodule, untereinander notwendig ist.

Die für das erfindungsgemäße System beschriebenen Vorteile und Merkmale sowie Ausführungsformen gelten gleichermaßen für entsprechende Verfahren und umgekehrt. Folglich können für Vorrichtungsmerkmale entsprechender Verfahrensmerkmale und umgekehrt vorgesehen sein.

Die vorstehenden in der Beschreibung genannten Merkmale und Merkmalskombinationen sowie die nachfolgenden in der Figurenbeschreibung genannten und/oder in den Figuren alleine gezeigten Merkmale und Merkmalskombinationen sind nicht nur in der jeweils angegebenen Kombination sondern auch in anderen Kombinationen oder in Alleinstellung verwendbar, ohne den Rahmen der Erfindung zu verlassen. Es sind somit auch Ausführung als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile und Merkmale ergeben sich anhand der vorliegenden Beschreibung eines Ausführungsbeispiels und unter Berücksichtigung der beigefügten Figuren. In den Figuren bezeichnen gleiche Bezugszeichen gleiche Merkmale und Funktionen.

Es zeigen:
- Fig. 1: In vereinfachter schematischer Darstellung ein bevorzugtes Ausführungsbeispiel eines erfindungsgemäßen Systems, und
- Fig. 2: eine schematische Darstellung einer beispielhaften Datenübertragung in dem System gemäß der Darstellung aus Fig. 1.

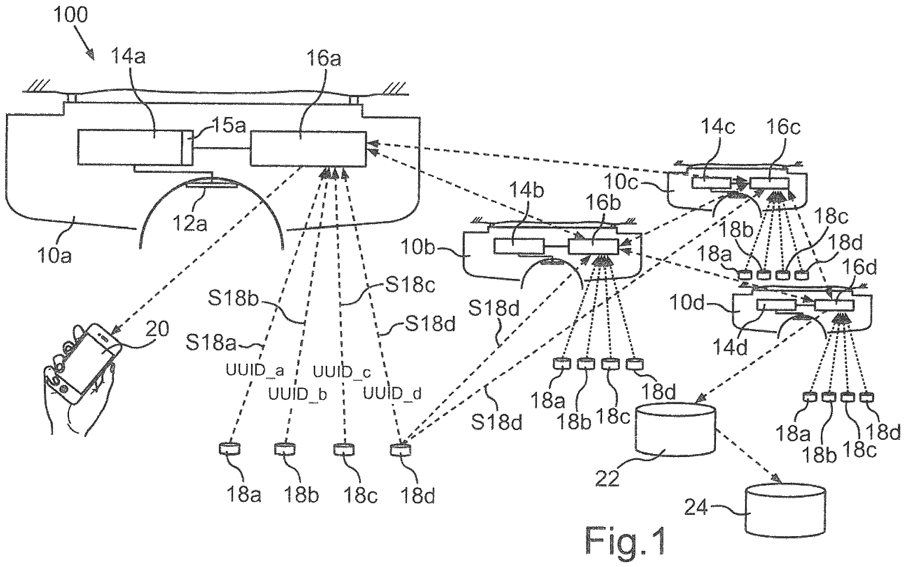

Gemäß einer bevorzugten Ausführungsform umfasst ein erfindungsgemäßes System 100 gemäß der Darstellung in Fig. 1 eine erste Leuchte 10a, eine zweite Leuchte 10b, eine dritte Leuchte 10c und eine vierte Leuchte 10d. Die vier Leuchten 10a, 10b, 10c, 10d sind jeweils identisch aufgebaut, sodass nachfolgend der detaillierte Aufbau nur am Beispiel der ersten Leuchte 10a erläutert wird, für die übrigen Leuchten 10b, 10c, 10d gilt dasselbe entsprechend mit angepassten Indizes. Die erste Leuchte 10a umfasst ein LED-Modul 12a. Das LED-Modul 12a wird betrieben von einem LED-Treiber 14a, welcher eine serielle Datenschnittstelle 15a aufweist, welche eine bidirektionale Datenverbindung mit einem KommunikationsModul in Form eines Bluetooth-Moduls 16a ermöglicht.

Hauptaufgabe der Leuchte 10a ist eine optimierte Lichtverteilung einem Bereich, für dessen Ausleuchtung die Leuchte 10a vorgesehen ist. Für Innenraumanwendungen sind verschiedene Typen von Leuchten verfügbar, hauptsächlich Langfeldleuchten (Linearlights), Strahler (Spotlights) oder Einbauleuchten, welche oftmals als Downlights in die Decke integriert sind. Eine Leuchte 10a besteht aus einem mechanischen, einem elektrischen und einem thermischen Interface, einem Gehäuse, optischen Linsen und/oder Reflektoren für die Lichtlenkung, die Lichtverteilung und die Entblendung. Die Leuchte 10a umfasst somit in dem System 100 das LED-Modul 12a, den LED-Treiber 14a sowie das Bluetooth-Modul 16a.

Der LED-Treiber 14a kann in vorteilhafter Weise dazu verwendet werden, das Bluetooth-Modul 16a elektrisch zu versorgen. Der LED-Treiber 14a umfasst eine serielle UART-Kommunikationsschnittstelle 15a, welche dazu dient, Steuerungsinformationen an das Bluetooth-Modul 16a zu schicken, um dieses in verschiedene Betriebsmodi zu schalten, Steuerungsinformationen von dem Bluetooth-Modul 16a zu erhalten, und schließlich Daten von einem mobilen Endgerät 20 erhalten, welche von dem Bluetooth-Modul 16a weitergeleitet werden, um damit Parameter in dem LED-Treiber 14a einzustellen und/oder Software-Updates zu installieren.

Wie bereits zuvor genannt, wird das Bluetooth-Modul 16a vorteilhaft von dem LED-Treiber 14a mit elektrischer Energie versorgt. Die bidirektionale UART-Kommunikationsschnittstelle 15a zwischen dem Bluetooth-Modul 16a und dem LED-Treiber 14a kann dazu benutzt werden, Steuerungsinformationen an das Bluetooth-Modul 16a zu senden, welche dieses in unterschiedliche Betriebsmodi schalten. Solche Modi können beispielsweise sein:
- Schlaf-Modus: Das Bluetooth-Modul 16a reagiert lediglich auf Kommandos der UART-Kommunikationsschnittstelle, das heißt die Bluetooth-Funktionalität ist in diesem Zustand abgeschaltet.
- Baken-Modus: Das Bluetooth-Modul 16a arbeitet im Beacon-Modus
- Konfigurationsmodus: Hier werden die Beacon-spezifischen Parameter gesetzt wie Timingintervall, Signalstärke (RSSI)
- Datenübertragungs-Modus I (High Data Mode): Das Bluetooth-Modul 16a wird benutzt, um eine Datenübertragung zwischen dem mobilen Endgerät 20 und dem Bluetooth-Modul 16a bereitzustellen. Dieser Modus wird benutzt, um Parameter des LED-Treibers 14a auszulesen, diese zu versenden und neue Parameter und Softwareupdates in den LED-Treiber 14a einzuspielen.
- Datenübertragungs-Modus II (Low Data Mode): Das Bluetooth-Modul 16a empfängt die UIID und die Signalstärke (RSSI) von vier Baken 18a, 18b, 18c, 18d. Diese Information vor dem Maschennetzwerk weitergeleitet zu den anderen Bluetooth-Modulen 16b, 16c, 16d und schließlich zu einem Bluetooth-Router 22, welcher als Gateway dient. Um die Identifikationsnummer UIID und die Signalstärke RSSI in einer einzigen Datenfolge/Bitbündel von 8 Bytes einzufügen, können die Daten komprimiert werden. Beispielsweise können zwei Bytes für die Signalstärke RSSI und 6 Bytes für die Identifikationsnummer UIID vorgesehen sein. Eine Bake kann von mehreren Bluetooth-Modulen 16a, 16b, 16c, 16d erfasst werden, um die Systemgenauigkeit zu verbessern.
- Steuerungs-Modus: Ein Steuerungsmodus kann dadurch gegeben sein, dass über das Bluetooth-Modul 16a Kommandos zur Steuerung des LED-Treibers 15a bereit gestellt werden. Das kann beispielsweise über eine Bedienstelle zur Einstellung eines Lichtwertes der Leuchte 10a erfolgen, insbesondere auch über ein mobiles Endgerät 20, ebenso kann vorgesehen sein, dass Bluetooth-Modul 16a mit einem externen Sensor über eine Bluetooth-Verbindung gekoppelt ist, um damit den LED-Treiber 14a in Abhängigkeit eines Sensorwertes zu steuern. In dem Steuerungs-Modus können somit Steuerungs-Informationen von dem Bluetooth-Modul 16a an den LED-Treiber 14a gesendet werden.

In der Fig. 1 ist dies am Beispiel einer ersten Bake 18a, einer zweiten Bake 18b, einer dritten Bake 18c sowie einer vierten Bake 18d dargestellt. Der Übersichtlichkeit halber sind lediglich von der vierten Bake 18d aus Verbindungen zu unterschiedlichen Bluetooth-Modulen 16a, 16b, 16c, 16d gezeichnet. Hilfsweise sind dafür die vier Baken 18a bis 18d nochmals dupliziert bei jeder der Leuchten 10b, 10c, 10d dargestellt.

Überdies können Maßnahmen vorgesehen sein, einen geschützten Zugriff auf die Bluetooth-Module 16a, 16b, 16c, 16d und die LED-Treiber 14a, 14b, 14c und 14d sicherzustellen.

Bei den vier Baken 18a, 18b, 18c, 18d handelt es sich um passive Bluetooth-Geräte, welche im Hinblick auf ihren Stromverbrauch optimiert sind, die vier Baken 18a, 18b, 18c, 18d senden lediglich dann jeweils ein Signal S18a, S18b, S18c, S18d aus, wenn sie bewegt werden. Damit kann der Stromverbrauch minimiert werden. Somit wird in dem System 100 angenommen, dass die bisherige Position beibehalten wird, wenn keine Bewegung vorliegt.

Die Baken 18a, 18b, 18c, 18d können beispielsweise an - insbesondere hochwertigen - tragbaren oder fahrbaren Geräten befestigt werden, beispielsweise medizinischen Geräten in Krankenhäusern. Auf diese Weise kann einfach erfasst werden, wo sich das betreffende Gerät gerade befindet.

Bevorzugt ist hierbei vorgesehen, dass die jeweilige Bake 18a, 18b, 18c, 18d ein Signal aussendet, wenn der Batterieladezustand niedrig ist, damit wird vermieden, dass eine der Baken 18a, 18b, 18c, 18d unbemerkt den Sendebetrieb einstellt, und nicht fälschlicherweise der dazugehörige Gegenstand an dem die Bake befestigt ist, als weiterhin an dem letzten bekannten Platz befindlich angenommen wird.

Der Bluetooth-Router 22, welcher als Gateway arbeitet, kann Daten an einen externen Server 24 senden und/oder von diesem empfangen. Der Bluetooth-Router 22 ist somit ein Zugangspunkt zu dem Bluetooth-Maschennetzwerk. Der Bluetooth-Router 22 dient somit der Weiterleitung von Daten (Informationen) und Kommandos in das Bluetooth-Maschennetzwerk.

Der Server 24 dient der Datenverwaltung. Hier können zentral alle Identifikationsdaten, also die Baken-Identifikationsnummern UUID_a, UUID_b, UUID_c, UUID_d sowie die Modul-Identifikationsnummern der einzelnen Bluetooth-Module 16a, 16b, 16c, 16d, einschließlich der jeweiligen Positionsinformationen zu der Einbauposition der jeweiligen Leuchte 10a, 10b, 10c, 10d beziehungsweise des integrierten Bluetooth-Moduls 16a, 16b, 16c, 16d gespeichert sein. Der Server 24 kann in Abhängigkeit von den Daten, welche ihm von dem Bluetooth-Gateway 22 aus dem Bluetooth-Maschennetzwerk bereitgestellt werden, die momentanen Positionen der jeweiligen Baken innerhalb des Systems 100, also der ersten Bake 18a, der zweiten Bake 18b, der dritten Bake 18c sowie der vierten Bake 18d ermitteln und diese fortlaufend aktualisieren.

Insbesondere kann vorgesehen sein, dass eine Bewegungshistorie der jeweiligen Baken aufgezeichnet wird. Auf diese Weise können beispielsweise auch statistische Auswertungen gewonnen werden, welche Geräte in welchem Bereich am häufigsten und am längsten eingesetzt werden.

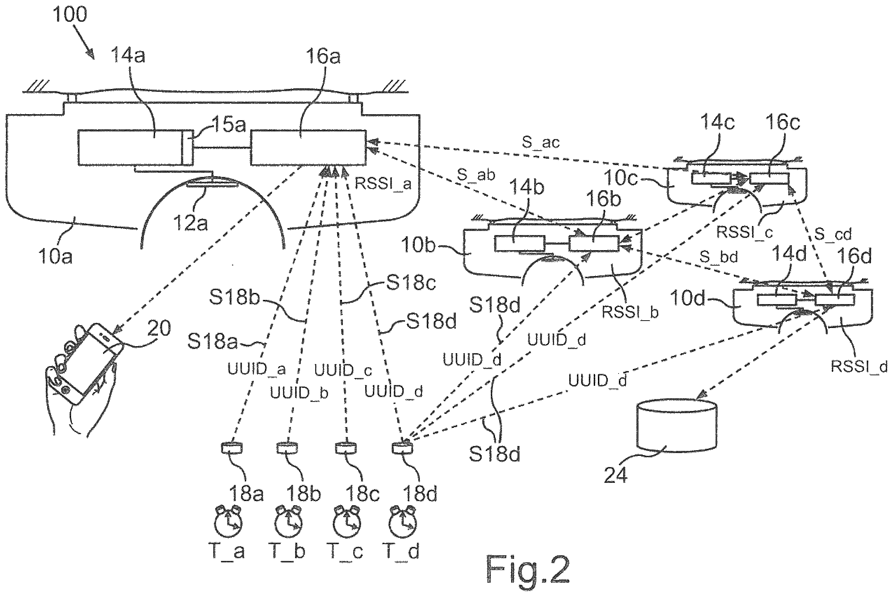

Fig. 2 zeigt exemplarisch den Datenverkehr auf dem Bluetooth-Netzwerk. Wie bereits zuvor dargestellt, sendet die erste Bake 18a ein erstes Identifikationssignal S18a, welches eine innerhalb des Systems 100 einmalige Baken-Identifikationsnummer UUID a beinhaltet. Zusätzlich zu der Baken-Identifikationsnummer UUID_a wird außerdem ein Zählerstand T_a übertragen. In gleicher Weise wird ein zweites Identifikationssignal S18b mit einer zweiten Baken-Identifikationsnummer UUID b und einem zweiten Zählerstand T_b, ein drittes Identifikationssignal S18c mit einer dritten Baken-Identifikationsnummer UUID_c sowie einem dritten Zählerstand T_c und einem vierten Identifikationssignal S18d mit einer vierten Baken-Identifikationsnummer UUID_d sowie einem vierten Zählerstand T_d gesendet. Beispielhaft weist der vierte Zählerstand T_d zu einem ersten Zeitpunkt T1 den Wert 11100 auf, und zu einem zweiten auf den ersten Zustand später folgenden Zeitpunkt T2 den Wert 11101 auf. Für die vierte Bake 18d sind jeweils die Übertragung zu allen vier Bluetooth- Modulen 16a, 16b, 16c, 16d dargestellt.

Die vierte Bake 18d sendet das vierte Identifikationssignal S18d an das erste Bluetooth-Modul 16a. Dieses empfängt das Signal S18d mit einer Signalstärke RSSI_a = 3. Das Identifikationssignal S18d wurde zu einem Zeitpunkt übertragen, in dem der Wert des vierten Zählerstandes T_d den Wert 11100 angenommen hat. Diese Daten werden nun als gemeinsames Datenpaket über eine Datenverbindung S_ac an das dritte Bluetooth-Modul 16c übertragen, nämlich "BTMod_a: UUID_d, RSSI_a = 3, T_d = 11100".

Dieses Datenpaket wird über eine weitere Datenverbindung S_cd von dem dritten Bluetooth-Modul 16c an das vierte Bluetooth-Modul 16d weitergeleitet mit demselben Paketinhalt "BTMod_a: UUID_d, RSSI_a = 3, T_d 11100". In gleicher Weise wird von dem ersten Bluetooth-Modul 16a über eine Datenverbindung S_ab das bereits dargestellte Datenpaket an das zweite Bluetooth-Modul 16b weitergeleitet.

Das zweite Bluetooth-Modul 16b hat doch auch auf direktem Weg das vierte Identifikationssignal S18d empfangen, allerdings mit einer geringeren Signalstärke. Der dazugehörige Datensatz, den das zweite Bluetooth-Modul 16b daraus ermittelt, lautet "BTMod_b: UUID_d, RSSI_b = 2, T_d = 11100". Die Identität der beiden Zählerstände, die aus dem jeweils empfangenen vierten Identifikationssignal S18d ermittelt wurden, ergibt somit, dass die beiden Datenpakete zumindest innerhalb eines vorgegebenen Zeitintervalls ermittelt wurden, das heißt zeitlich miteinander korreliert sind.

Das von dem zweiten Bluetooth-Modul 16b erzeugte Datenpaket wird von dem vierten Bluetooth-Modul 16d ebenso wie das von dem ersten Bluetooth-Modul 16a erzeugte und über das dritte Bluetooth-Modul 16c weitergeleitete Datenpaket an den Server 24 weitergeleitet. Das Gateway 22 wurde in der Fig. 2 der Übersichtlichkeit halber weggelassen.

Somit kann das sich nun beispielhaft bei dem Server 24 folgende Tabelle von Datensätzen ergeben:
BTMod_a: UUID_d, RSSI_a = 3, T_d = 11100
BTMod_b: UUID_d, RSSI_b = 2, T_d = 11100
BTMod_c: UUID_d, RSSI_c = 5, T_d = 11101
BTMod_d: UUID_d, RSSI_d = 3, T_d = 11100
BTMod_a: UUID_d, RSSI_a = 3, T_d = 11101
BTMod_b: UUID_d, RSSI_b = 2, T_d = 11101
BTMod_c: UUID_d, RSSI_c = 5, T_d = 11100
BTMod_d: UUID_d, RSSI_d = 3, T_d = 11101

Somit kann auch der Fall eintreten, dass eine zeitlich zuerst erfolgte Erfassung der vierten Bake 18d über das dritte Bluetooth-Modul 16c erst nach einer späteren Erfassung zwischen denselben beteiligten Bluetooth-Senderbeziehungsweise Empfängerpaaren an den Server 24 übertragen wird.

Ebenso kann die aus der in Fig. 2 dargestellten Konstellation ergeben, dass nach der Übertragung des Datenpaketes "BTMod_b: UUID_d, RSSI_b = 2, T_d = 11100" an das vierte Bluetooth-Modul 16d auch das zuerst dargestellte Datenpaket über die Datenverbindung S_ab mittels des zweiten Bluetooth-Moduls 16b an das viertes Bluetooth-Modul 16d weitergeleitet wird und anschließend an den Server 14 weitergeleitet wird, welcher daraus erkennt das er genau dasselbe Datenpaket mit identischem Zeitstempel bereits auf anderem Weg erhalten hat.

Das Ausführungsbeispiel dient lediglich der Erläuterung der Erfindung und ist für diese nicht beschränkend. Insbesondere die konkreten Ausgestaltungen des Datenformats können beliebig gestaltet sein, ohne den Gedanken der Erfindung zu verlassen.

Somit wurde voranstehend gezeigt, wie eine Kompensation der Durchlaufverzögerung für eine verbesserte Baken-Positionsbestimmung in Gebäuden realisiert sein kann.

## Patentansprüche

1. System (100) zur Positionsermittlung einer mobilen Bake (18a, 18b, 18c, 18d) umfassend:
- mindestens eine erste und mindestens eine zweite Beleuchtungseinrichtung (10a, 10b, 10c, 10d), umfassend jeweils ein Kommunikationsmodul (16a, 16b, 16c, 16d) zum Aufbau eines Datennetzwerks zwischen der mindestens einen ersten und mindestens einen zweiten Beleuchtungseinrichtung mittels einer drahtlosen Kommunikationsverbindung,
- die mobile Bake, welche dazu ausgelegt ist, ein Identifikationssignal (S18a, S18b, S18c, S18d) mit einer innerhalb des Systems einmaligen Baken-Identifikationsnummer (UUID_a, UUID_b, UUID_c, UUID_d) auszusenden, wobei
- die jeweiligen Kommunikationsmodule der mindestens einen ersten und mindestens einen zweiten Beleuchtungseinrichtung dazu ausgelegt sind, eine jeweilige Signalstärke (RSSI_a, RSSI_b, RSSI_c, RSSI_d), mit der das Identifikationssignal von dem jeweiligen Kommunikationsmodul empfangbar ist, zu ermitteln,
**dadurch gekennzeichnet, dass**
- das Datennetzwerk vermascht ist, und
- die mobile Bake einen Zeitgeber aufweist und dazu ausgelegt ist, zusätzlich zu der Baken-Identifikationsnummer einen Zählerstand (T_a, T_b, T_c, T_d) des Zeitgebers korrespondierend mit einem Zeitpunkt des Aussendens des ersten Identifikationssignals zu übertragen.

2. System (100) nach Anspruch 1,
**dadurch gekennzeichnet,**
**dass** das jeweilige Kommunikationsmodul (16a, 16b, 16c,16d) eine innerhalb des Systems einmalige Modul-Identifikationsnummer (BTMod_a, BTMod_b, BTMod_c, BTMod_d) aufweist, wobei das jeweilige Kommunikationsmodul dazu ausgelegt ist, beim Empfang des Identifikationssignals (S18a, S18b, S18c, S18d) über das Datennetzwerk einen Datensatz umfassend seine eigene Modul-Identifikationsnummer, die mit dem ersten Identifikationssignal übertragene Baken-Identifikationsnummer (UUID_a, UUID_b, UUID_c, UUID_d), die jeweils ermittelte Signalstärke (RSSI_a, RSSI_b, RSSI_c, RSSI_d) sowie den mit dem Identifikationssignal übertragenen Zählerstand (T_a, T_b, T_c, T_d) zu versenden.

3. System (100) nach Anspruch 2,
**gekennzeichnet durch**
- eine Servereinheit (24), in welcher die Einbaupositionen der mindestens einen ersten und mindestens einen zweiten Beleuchtungseinrichtung als Funktion der jeweiligen Modul-Identifikationsnummer (BTMod_a, BTMod_b, BTMod_c, BTMod_d) gespeichert ist und welche dazu ausgelegt ist, in Abhängigkeit von den jeweils aus dem vermaschten Datennetzwerk an die Servereinheit übertragbaren Datensätzen, welche die Baken-Identifikationsnummer (UUID_a, UUID_b, UUID_c, UUID_d) der mobilen Bake (18a, 18b, 18c, 18d) enthalten, die Position der mobilen Bake zu ermitteln.

4. System (100) nach Anspruch 3,
**dadurch gekennzeichnet,**
**dass** die Servereinheit (24) dazu ausgelegt ist, für die Ermittlung der Position der mobilen Bake (S18a, S18b, S18c, S18d) nur Datensätze zu berücksichtigen, deren übertragener Zählerstand (T_a, T_b, T_c, T_d) innerhalb eines jeweils vorgebbaren Wertebereichs liegt.

5. System (100) nach einem der vorhergehenden Ansprüche,
**dadurch gekennzeichnet,**
**dass** das vermaschte Datennetzwerk als Bluetooth-Maschennetzwerk ausgebildet ist.

6. System (100) nach einem der vorhergehenden Ansprüche,
**gekennzeichnet durch**
ein Gateway (22), welches dazu ausgelegt ist, eine Datenverbindung zu dem vermaschten Datennetzwerk bereitzustellen.

7. System (100) nach einem der vorhergehenden Ansprüche,
**dadurch gekennzeichnet,**
**dass** zumindest die erste Beleuchtungseinrichtung (10a) ein Leuchtmittel (12a) sowie ein elektronisches Betriebsgerät (14a) zum Betreiben des Leuchtmittels umfasst, wobei das Kommunikationsmodul (16a) der ersten Beleuchtungseinrichtung über eine Datenschnittstelle (15) mit dem elektronischen Betriebsgerät verbunden ist, wobei das Kommunikationsmodul dazu ausgelegt ist, Betriebswerte aus dem elektronischen Betriebsgerät auszulesen und/oder in das elektronische Betriebsgerät einzuschreiben.

8. System (100) nach Anspruch 7,
**dadurch gekennzeichnet,**
**dass** das elektronische Betriebsgerät (14a) dazu ausgelegt ist, eine Energieversorgung für das Kommunikationsmodul (16a) der ersten Beleuchtungseinrichtung (10a) bereitzustellen.

9. System (100) nach einem der vorhergehenden Ansprüche,
**dadurch gekennzeichnet,**
**dass** die mobile Bake (18a, 18b, 18c, 18d) dazu ausgelegt ist, eine Eigenbewegung zu detektieren und in Abhängigkeit von einer detektieren Eigenbewegung das Identifikationssignal (S18a, S18b, S18c, S18d) auszusenden.

10. Verfahren zur Positionsermittlung einer mobilen Bake (18a, 18b, 18c, 18d), umfassend:
- Aufbauen eines Datennetzwerks zwischen mindestens einer ersten und mindestens einer zweiten Beleuchtungseinrichtung (10a, 10b, 10c, 10d) mittels einer drahtlosen Kommunikationsverbindung,
- Aussenden eines Identifikationssignals (S18a, S18b, S18c, S18d) mit einer innerhalb eines Systems (100) einmaligen Baken-Identifikationsnummer (UUID_a, UUID_b, UUID_c, UUID_d) durch die mobile Bake,
- Ermitteln einer jeweiligen Signalstärke (RSSI_a, RSSI_b, RSSI_c, RSSI_d), mit der das erste Identifikationssignal von einem jeweiligen Kommunikationsmodul (16a, 16b, 16c,16d) der mindestens einen ersten und mindestens einen zweiten Beleuchtungseinrichtung empfangen wird,
**dadurch gekennzeichnet, dass**
- das Datennetzwerk vermascht ist,
und dass das Verfahren weiterhin umfasst:
- zusätzlich zu der Baken-Identifikationsnummer Übertragen eines Zählerstands (T_a, T_b, T_c, T_d) eines Zeitgebers der mobilen Bake mit dem ersten Identifikationssignal korrespondierend mit einem Zeitpunkt des Aussendens des ersten Identifikationssignals zu übertragen.

## Claims

1. System (100) for ascertaining the position of a mobile beacon (18a, 18b, 18c, 18d),
comprising
- at least one first and at least one second lighting device (10a, 10b, 10c, 10d), each comprising a communication module (16a, 16b, 16c, 16d) for setting up a data network between the at least one first and at least one second lighting device by means of a wireless communication link,
- the mobile beacon, which is designed to emit an identification signal (S18a, S18b, S18c, S18d) with a beacon identification number (UUID _a, UUID_b, UUID_c, UUID_d) that is unique within the system, wherein
- the respective communication modules of the at least one first and at least one second lighting device are designed to ascertain a respective signal strength (RSSI_a, RSSI_b, RSSI_c, RSSI_d) at which the identification signal is receivable by the respective communication module, **characterized in that**
- the data network is meshed, and
- the mobile beacon has a timer and is designed to transmit, in addition to the beacon identification number, a counter reading (T_a, T_b, T_c, T_d) of the timer corresponding to a time of emission of the first identification signal.

2. System (100) according to Claim 1,
**characterized**
**in that** the respective communication module (16a, 16b, 16c, 16d) has a module identification number (BTMod_a, BTMod_b, BTMod_c, BTMod_d) that is unique within the system, wherein the respective communication module is designed so as, on reception of the identification signal (S18a, S18b, S18c, S18d), to use the data network to send a data record comprising its own module identification number, the beacon identification number (UUID_a, UUID_b, UUID_c, UUID_d) transmitted with the first identification signal, the respectively ascertained signal strength (RSSI_a, RSSI_b, RSSI_c, RSSI_d) and the counter reading (T_a, T_b, T_c, T_d) transmitted with the identification signal.

3. System (100) according to Claim 2,
**characterized by**
- a server unit (24) that stores the installation positions of the at least one first and at least one second lighting device as a function of the respective module identification number (BTMod_a, BTMod_b, BTMod_c, BTMod_d) and that is designed to take the data records that are each transmittable from the data network to the server unit and include the beacon identification number (UUID_a, UUID_b, UUID_c, UUID_d) of the mobile beacon (18a, 18b, 18c, 18d) as a basis for ascertaining the position of the mobile beacon.

4. System (100) according to Claim 3,
**characterized**
**in that** the server unit (24) is designed to ascertain the position of the mobile beacon (S18a, S18b, S18c, S18d) by taking into consideration only data records whose transmitted counter reading (T_a, T_b, T_c, T_d) is within a respectively prescribable range of values.

5. System (100) according to one of the preceding claims,
**characterized**
**in that** the meshed data network is configured as a Bluetooth mesh network.

6. System (100) according to one of the preceding claims,
**characterized by**
a gateway (22) that is designed to provide a data link to the meshed data network.

7. System (100) according to one of the preceding claims,
**characterized**
**in that** at least the first lighting device (10a) comprises an illuminant (12a) and an electronic operating unit (14a) for operating the illuminant, wherein the communication module (16a) of the first lighting device is connected to the electronic operating unit via a data interface (15), wherein the communication module is designed to read operating values from the electronic operating unit and/or to write them to the electronic operating unit.

8. System (100) according to Claim 7,
**characterized**
**in that** the electronic operating unit (14a) is designed to provide a power supply for the communication module (16a) of the first lighting device (10a).

9. System (100) according to one of the preceding claims,
**characterized**
**in that** the mobile beacon (18a, 18b, 18c, 18d) is designed to detect a proper motion and to take a detected proper motion as the basis of emitting the identification signal (S18a, S18b, S18c, S18d).

10. Method for ascertaining the position of a mobile beacon (18a, 18b, 18c, 18d),
comprising:
- setup of a data network between at least one first and at least one second lighting device (10a, 10b, 10c, 10d) by means of a wireless communication link,
- emission of an identification signal (S18a, S18b, S18c, S18d) with a beacon identification number (UUID_a, UUID_b, UUID_c, UUID_d) that is unique within a system (100) by the mobile beacon,
- ascertainment of a respective signal strength (RSSI_a, RSSI_b, RSSI_c, RSSI_d) at which the first identification signal is received by a respective communication module (16a, 16b, 16c, 16d) of the at least one first and at least one second lighting device,
**characterized in that**
- the data network is meshed,
and **in that** the method furthermore comprises:
- in addition to the beacon identification number, transmission of a counter reading (T_a, T_b, T_c, T_d) of a timer of the mobile beacon with the first identification signal corresponding to a time of emission of the first identification signal for transmission.

## Revendications

1. Système (100) de détermination de position d'une balise mobile (18a, 18b, 18c, 18d) comprenant :
- au moins un premier et au moins un second dispositifs d'éclairage (10a, 10b, 10c, 10d), comprenant respectivement un module de communication (16a, 16b, 16c, 16d) pour constituer un réseau de données entre ledit au moins un premier et ledit au moins un second dispositifs d'éclairage au moyen d'une liaison de communication sans fil,
- la balise mobile, qui est conçue pour émettre un signal d'identification (S18a, S18b, S18c, S18d) avec un numéro d'identification de balise (UUID_a, UUID_b, UUID_c, UUID_d) unique à l'intérieur du système, dans lequel
- les modules de communication respectifs du dit au moins un premier et du dit au moins un second dispositifs d'éclairage sont conçus pour déterminer une intensité de signal respective (RSSI_a, RSSI_b, RSSI_c, RSSI_d), à laquelle le signal d'identification peut être reçu par le module de communication respectif,
**caractérisé en ce que**
- le réseau de données est maillé, et
- la balise mobile comprend une horloge et est conçue pour transmettre, en plus du numéro d'identification de balise, un état de comptage (T_a, T_b, T_c, T_d) de l'horloge correspondant à un instant d'émission du premier signal d'identification.

2. Système (100) selon la revendication 1, **caractérisé en ce que** le module de communication respectif (16a, 16b, 16c, 16d) possède un numéro d'identification de module (BTMod_a, BTMod_b, BTMod_c, BTMod_d) unique à l'intérieur du système, dans lequel le module de communication respectif est conçu pour envoyer, à réception du signal d'identification (S18a, S18b, S18c, S18d) via le réseau de données, un ensemble de données contenant son propre numéro d'identification de module, le numéro d'identification de balise (UUID_a, UUID_b, UUID_c, UUID_d) transmis avec le premier signal d'identification, l'intensité du signal (RSSI_a, RSSI_b, RSSI_c, RSSI_d) déterminée respectivement et l'état de comptage (T_a, T_b, T_c, T_d) transmis avec le signal d'identification.

3. Système (100) selon la revendication 2, **caractérisé par**
- une unité de serveur (24), dans laquelle les positions de montage du au moins un premier et du au moins un second dispositifs d'éclairage sont enregistrées en fonction du numéro d'identification de module (BTMod_a, BTMod_b, BTMod_c, BTMod_d) respectif et qui est configurée pour déterminer la position de la balise mobile en fonction des ensembles de données transmissibles respectivement depuis le réseau de données maillé à l'unité de serveur qui contiennent le numéro d'identification de balise (UUID_a, UUID_b, UUID_c, UUID_d) de la balise mobile (18a, 18b, 18c, 18d).

4. Système (100) selon la revendication 3, **caractérisé en ce que** l'unité de serveur (24) est conçue de manière à prendre en compte, pour déterminer la position de la balise mobile (S18a, S18b, S18c, S18d), uniquement des ensembles de données dont l'état de comptage (T_a, T_b, T_c, T_d) transmis est compris dans une plage de valeurs respectivement prédéterminée.

5. Système (100) selon l'une des revendications précédentes, **caractérisé en ce que** le réseau de données maillé est constitué sous forme d'un réseau de données maillé Bluetooth.

6. Système (100) selon l'une des revendications précédentes, **caractérisé par** une passerelle (22) qui est conçue pour fournir une liaison de données avec le réseau de données maillé.

7. Système (100) selon l'une des revendications précédentes, **caractérisé en ce que** le au moins un premier dispositif d'éclairage (10a) comprend un moyen d'éclairage (12a) et un appareil de contrôle électronique (14a) pour alimenter le moyen d'éclairage, dans lequel le module de communication (16a) du premier dispositif d'éclairage est connecté à l'appareil de contrôle électronique par l'intermédiaire d'une interface de données (15), et dans lequel le module de communication est conçu pour extraire des valeurs de fonctionnement de l'appareil de contrôle électronique et/ou pour les inscrire dans l'appareil de contrôle électronique.

8. Système (100) selon la revendication 7, **caractérisé en ce que** l'appareil de contrôle électronique (14a) est conçu pour fournir une alimentation d'énergie au module de communication (16a) du premier dispositif d'éclairage (10a) .

9. Système (100) selon l'une des revendications précédentes, **caractérisé en ce que** la balise mobile (18a, 18b, 18c, 18d) est conçue pour détecter un mouvement propre et pour émettre le signal d'identification (S18a, S18b, S18c, S18d) en fonction d'un mouvement propre détecté.

10. Procédé de détermination de position d'une balise mobile (18a, 18b, 18c, 18d) comprenant :
- la constitution d'un réseau de données entre au moins un premier et au moins un second dispositifs d'éclairage (10a, 10b, 10c, 10d) au moyen d'une liaison de communication sans fil,
- l'émission par la balise mobile d'un signal d'identification (S18a, S18b, S18c, S18d) avec un numéro d'identification de balise (UUID_a, UUID_b, UUID_c, UUID_d) unique à l'intérieur d'un système (100),
- la détermination d'une intensité de signal respective (RSSI_a, RSSI_b, RSSI_c, RSSI_d), à laquelle le premier signal d'identification est reçu par un module de communication respectif (16a, 16b, 16c, 16d) du au moins un premier et du au moins un second dispositifs d'éclairage,
**caractérisé en ce que**
- le réseau de données est maillé, et
**en ce que** le procédé comprend en outre :
- en plus du numéro d'identification de balise, la transmission d'un état de comptage (T_a, T_b, T_c, T_d) d'une horloge de la balise mobile avec le premier signal d'identification, correspondant à un instant d'émission du premier signal d'identification à transmettre.
